# EUROPÄISCHE PATENTSCHRIFT

(11) **EP 1 097 635 B1**
(45) Veröffentlichungstag und Bekanntmachung des Hinweises auf die Patenterteilung: **13.04.2005**
(21) Anmeldenummer: 00122826.1
(22) Anmeldetag: 20.10.2000
(51) Int. Cl.: A01K 39/02

(54) **Vorrichtung zum Ausgleich des Drucks einer Flüssigkeit und Verfahren zur Änderung des Druckausgleichsverhältnisses**
Device for equalizing pressure in a liquid and method for changing the pressure balance proportion
Dispositif d'équilibrage de pression de liquide et procédé pour changer la proportion d'équilibrage de pression

(30) Priorität: 08.11.1999 DE 19953656
(43) Veröffentlichungstag der Anmeldung: 09.05.2001
(73) Patentinhaber: LUBING MASCHINENFABRIK LUDWIG BENING GmbH & Co. KG, D-49406 Barnstorf (DE)
(72) Erfinder: Schumacher, Egon, 49406 Barnstorf (DE)
(74) Vertreter: Möller, Friedrich, Dipl.-Ing.

(56) Entgegenhaltungen:
- GB-A- 2 329 953
- US-A- 5 141 023
- US-A- 5 870 970

## Beschreibung

Die Erfindung betrifft eine Vorrichtung zum Ausgleich des Drucks einer Flüssigkeit, insbesondere einer vorzugsweise geneigten Flüssigkeitsleitung zur Speisung von Tränkenippeln für Tiere gemäß dem Oberbegriff des Anspruchs 1. Des weiteren betrifft die Erfindung ein Verfahren zur Änderung des Druckausgleichsverhältnisses in insbesondere einer geneigten Flüssigkeitsleitung zur Speisung von Tränkenippeln für Tiere gemäß dem Oberbegriff des Anspruchs 10.

Vorrichtungen der hier angesprochenen Art werden im Fachjargon als Gefälleregler bezeichnet. Sie finden bevorzugt Verwendung im Verlauf geneigter Flüssigkeitsleitungen zur Speisung von Tränkenippeln für Tiere, insbesondere Geflügel. Bei geneigten Flüssigkeitsleitungen steigt der Druck im Verlauf derselben an. Die Gefälleregler dienen dazu, den Druck im Verlauf der geneigten Flüssigkeitsleitung zu vergleichmäßigen.

Aus der US 5 870 970 A ist ein Gefälleregler bekannt, der über eine Ventilanordnung verfügt, die einen federbeaufschlagten Ventilkörper aufweist. Die dazu erforderliche Feder führt in der Praxis häufig zu Problemen. Beispielsweise ändert die Feder mit zunehmendem Alter ihre Federcharakteristik, wodurch der Druck in der geneigten Flüssigkeitsleitung nur unzureichend verändert wird. Darüber hinaus kann die Feder durch einen Bruch oder dergleichen mit der Zeit versagen. Der bekannte Gefälleregler arbeite somit nur unzuverlässig: Ein weiterer Nachteil des bekannten Gefällereglers besteht darin, dass er keine Veränderung des Druckverhältnisses zulässt, wenn sich die Einsatzbedingungen ändern.

Aus der GB 2 329 953 A ist ein Gefälleregler bekannt, der einen als Kugel ausgebildeten Ventilkörper aufweist. Die Kugel schließt das Ventil durch Eigengewicht, wodurch keine Feder erforderlich ist. Die Kugel erfordert aber ein zusätzliches Beschwerungselement. Zur Führung der Kugel und des Beschwerungselements erfordert die Ventilanordnung des bekannten Gefällereglers neben einem Ventilsitz ein Öffnungsteil. Dadurch verfügt die Ventilanordnung über einen sehr komplexen Aufbau, worunter die Zuverlässigkeit des bekannten Gefällereglers leidet.

Hiervon ausgehend liegt der Erfindung die Aufgabe zugrunde, eine Vorrichtung (Gefälleregler) und ein Verfahren der eingangs genannten Art zu schaffen, womit in einfacher und zuverlässiger Weise der Druck entlang geneigter Flüssigkeitsleitungen den Verhältnissen entsprechend anpassbar ist.

Eine Vorrichtung zur Lösung dieser Aufgabe weist die Merkmale des Anspruchs 1 auf. Dadurch, dass die Ventilanordnung einen vorzugsweise zylindrischen Ventilstift aufweist, der durch sein Eigengewicht schließt, kann die beim bekannten Gefälleregler bzw. Gefälledruckregler erforderliche Feder entfallen. Außerdem gewährleistet der Ventilstift ein zuverlässiges Öffnen und Schließen der Ventilanordnung, weil er durch seine vorzugsweise zylindrische Gestalt sich sicher auf- und abbewegbar führen lässt.

Weiterhin ist vorgesehen, die Ventilanordnung einer Kammer für abfließende Flüssigkeit zuzuordnen. Dadurch kann der Ventilstift senkrecht über der Kammer der zufließenden Flüssigkeit angeordnet werden. Aufgrund dessen kann der auf- und abbewegbare Ventilstift durch sein Eigengewicht die Ventilanordnung schließen.

Gemäß einer bevorzugten Ausgestaltung der Erfindung ist der Ventilstift vorzugsweise an seiner Unterseite mit einer kegeligen, insbesondere kegelstumpfartigen, Dichtfläche versehen. Diese kegelstumpfartige Dichtfläche korrespondiert mit einem ebenfalls kegelig, insbesondere kegelstumpfartig, ausgebildeten Ventilsitz. Auf diese Weise wird eine zulässige Dichtung gewährleistet, wenn die Dichtfläche des Ventilstifts auf dem Ventilsitz aufliegt. Ein schwerkraftbedingtes zuverlässiges Schließen der Ventilanordnung ist dadurch gewährleistet, und zwar auch schon bei kleinen Ventilstiften, die nur über ein geringes Eigengewicht verfügen.

Gemäß einer bevorzugten Ausgestaltung der Erfindung ist die Führung für den Ventilstift länger als die Länge desselben. Insbesondere weist die Führung eine 1,5- bis 2-fache Länge des Ventilstifts auf. Dadurch kann zum Spülen der Flüssigkeitsleitung der Ventilstift so weit vom Ventilsitz in vorzugsweise einer Trennwand zwischen den Kammern wegbewegt werden, dass ein zum Spülen der Flüssigkeitsleitung ausreichend großer Flüssigkeitsstrom auch durch die Ventilanordnung strömen kann. Der erfindungsgemäße Gefälleregler lässt dadurch ein ungehindertes Spülen der Tränkeeinrichtung zu.

Des weiteren ist vorgesehen, die Führung für den Ventilstift in einem hülsenartigen Einsteckteil vorzusehen, das in einer korrespondierenden Buchse bzw. Hülse des Gehäuses angeordnet ist. Es lässt sich so mit dem Einsteckteil der Ventilstift der Ventilanordnung aus der am Gehäuse angeordneten Buchse oder Hülse des Gefällereglers herausnehmen, beispielsweise zum Reinigen der Ventilanordnung. Um das Einsteckteil zusammen mit dem Ventilstift montieren und demontieren zu können, ist der Ventilstift im Einsteckteil gegen Heraüsfallen gesichert. Vorzugsweise weist zu diesem Zweck das Einsteckteil Federzungen auf, die durch eine elastische Verformung ein Trennen des Ventilstifts vom Einsteckteil ermöglichen, wenn der Ventilstift ausgetauscht werden soll.

Ein Verfahren zur Lösung der eingangs genannten Aufgabe weist die Maßnahmen des Anspruchs 10 auf. Demnach wird die Ventilanordnung mit Ventilstiften unterschiedlichen Eigengewichts versehen, um das Druckausgleichsverhältnis des Gefällereglers zu ändern. Bei einem vergleichsweise schweren Ventilstift führt der Gefälleregler eine größere Druckdifferenz zwischen der der Kammer zufließenden Flüssigkeit und der Kammer der abfließenden Flüssigkeit herbei. Umgekehrt führt ein leichterer Ventilstift zu geringerem Druckunterschied in den durch die Ventilanordnung verbundenen Kammern. Auf diese Weise ist eine einfache und kostengünstige Veränderung der vom Gefälleregler herbeiführbaren Druckverhältnisse möglich.

Beim bevorzugten Verfahren wird der Ventilstift zusammen mit dem Einsteckteil ausgetauscht. Das herausziehbar im Gehäuse des Gefällereglers angeordnete Einsteckteil lässt sich leicht montieren und demontieren. Ein Ausbau des Ventilstifts aus dem Einsteckteil kann sich dann erübrigen, so dass innerhalb kürzester Zeit eine Umrüstung des Gefällereglers möglich ist.

Alternativ ist es auch möglich, das Einsteckteil zusammen mit dem Ventilstift aus der Hülse des Gehäuses herauszuziehen und bei demontiertem Einsteckteil den Ventilstift zu tauschen, indem dieser vom Einsteckteil getrennt und durch einen anderen Ventilstift, insbesondere einen schwereren oder leichteren Ventilstift, ersetzt wird. Es kann dann stets das gleiche Einsteckteil verwendet werden, wenn gemäß einer bevorzugten Ausführungsform der Erfindung sich die unterschiedlichen Ventilstifte nicht im Durchmesser, sondern nur in der Länge unterscheiden.

Ein bevorzugtes Ausführungsbeispiel der Erfindung und das erfindungsgemäße Verfahren werden nachfolgend anhand der Zeichnung näher erläutert. In dieser zeigen:
- Fig. 1: eine perspektivische Darstellung der Vorrichtung,
- Fig. 2: eine Draufsicht auf die Vorrichtung der Fig. 1,

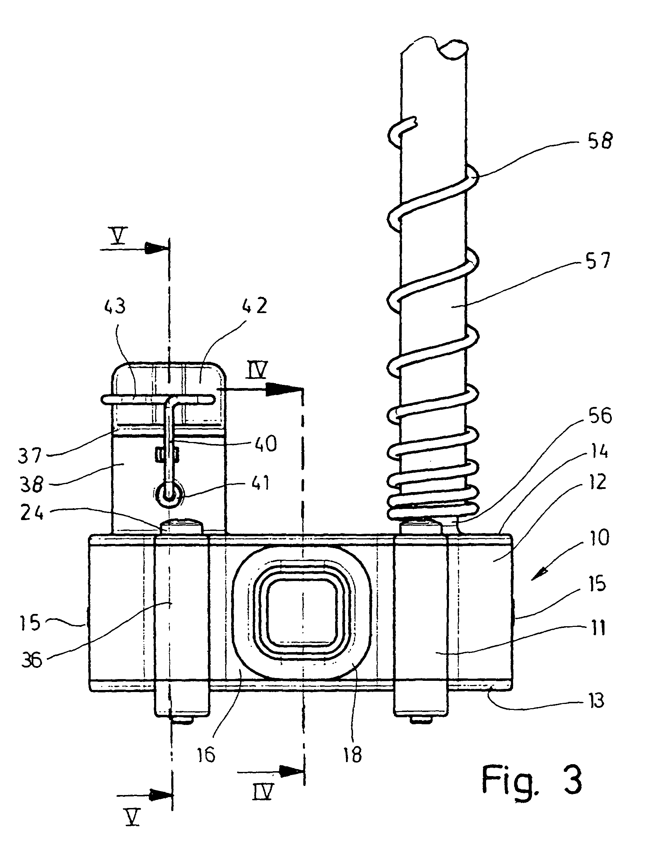

- Fig. 3: eine Seitenansicht mit Blick auf einen Wasserzulauf,
- Fig. 4: einen Schnitt IV-IV durch die Vorrichtung, und
- Fig. 5: einen Schnitt V-V durch die Vorrichtung.

Bei der hier gezeigten Vorrichtung handelt es sich um einen Gefälleregler bzw. Gefälledruckregler einer Tränkeeinrichtung für Tiere, insbesondere Geflügel. Die Tränkeeinrichtung dient zur Versorgung der Tiere mit einer Flüssigkeit, insbesondere Wasser, das gegebenenfalls Zusätze wie zum Beispiel Medikamente enthalten kann.

Die im übrigen in den Figuren nicht gezeigte Tränkeeinrichtung ist hängend in einem Stall zur Aufnahme der Tiere angeordnet. Die Tränkevorrichtung verfügt über eine durch den Stall verlaufende, längliche Wasserversorgungsleitung mit einem beispielsweise viereckigen, gerundete Ecken aufweisenden Querschnitt. Am Wassereinlauf der Wasserversorgungsleitung ist ein Druckminderer angeordnet, der den Wasserdruck einer Wasserspeiseleitung auf den Betriebsdruck der Tränkeeinrichtung reduziert. Entlang der Wasserversorgungsleitung sind in regelmäßigen Abständen Tränkeventile angeordnet. Durch entsprechendes Betätigen der Tränkeventile können die Tiere ihren Wasserbedarf selbstständig decken.

Die Wasserversorgungsleitung verläuft vielfach zur Horizontalen leicht geneigt. Das ist insbesondere der Fall, wenn ein Stall geographisch bedingt auf schrägem Untergrund errichtet wird und/oder zum einfachen Reinigen die Wasserversorgungsleitungen ein künstliches Gefälle aufweisen. In solchen ausgehend von der Wassereinspeisung abwärtsgeneigt verlaufenden Wasserversorgungsleitungen steigt der Druck im Verlauf derselben stetig an. Zur Vergleichmäßigung des Wasserdrucks in solchen schräg verlaufenden Wasserversorgungsleitungen dient die erfindungsgemäße Vorrichtung. In der Regel sind mehrere solcher Vorrichtungen mit gleichmäßigen Abständen entlang der Wasserversorgungsleitung angeordnet. Eine solche Tränkeeinrichtung ist beispielsweise aus der US 5 870 970 bekannt. Hinsichtlich des prinzipiellen Aufbaus der Tränkeeinrichtung wird hierauf Bezug genommen. Auch hier sind entlang der geneigten Wasserversorgungsleitung mehrere Gefälleregler, sogenannte "Pressure Regulatoren", angeordnet. Bei der erfindungsgemäßen Vorrichtung handelt es sich um eine Weiterentwicklung bzw. Umgestaltung der aus der US 5 870 970 bekannten "Pressure Regulatoren".

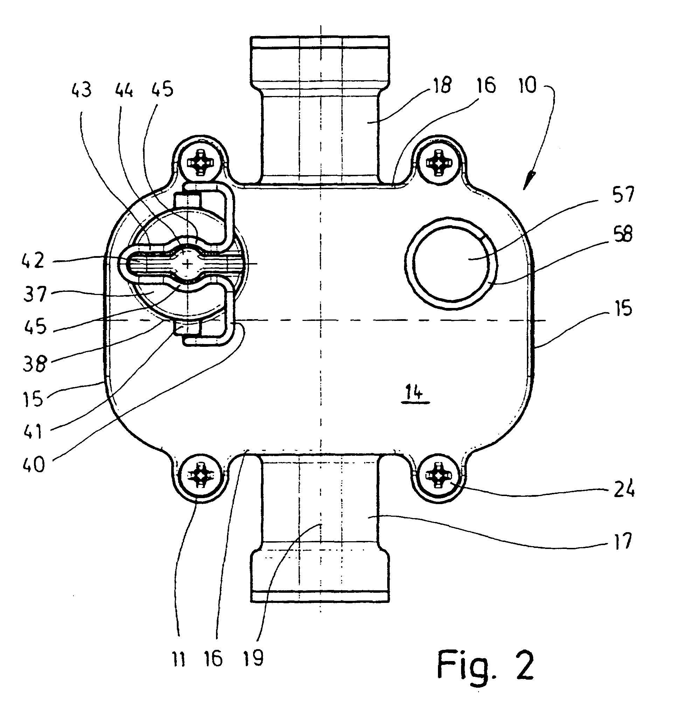

Die Vorrichtung weist im hier gezeigten Ausführungsbeispiel ein kastenförmiges Gehäuse 10 mit einer im wesentlichen rechteckförmigen Grundfläche (Fig. 2) auf. Das Gehäuse 10 ist aus Kunststoff gebildet. Gegenüberliegende Seiten des Gehäuses 10 weisen jeweils zwei nach außen vorstehende Ausbuchtungen 11 auf.

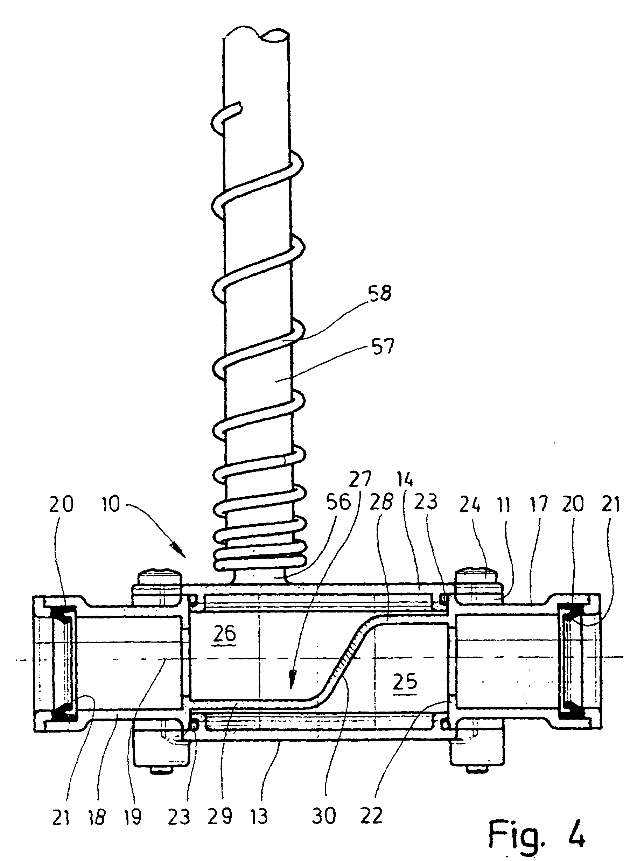

Das Gehäuse 10 ist mehrteilig ausgebildet. Es setzt sich zusammen aus einem Gehäusemittelteil 12, einer unteren, ebenen Bodenplatte 13 und einer oberen, ebenfalls ebenen Deckelplatte 14. Das Gehäusemittelteil 12 ist von einer umlaufenden, aufrechten Seitenwandung umgeben, die sich aus zwei parallelen Längsseitenwandungen 15 und zwei parallelen Querseitenwandungen 16 zusammensetzt. Einer Querseitenwandung 16 ist ein Wasserzulaufstutzen 17 zugeordnet, während die gegenüberliegende Querseitenwandung 16 einen Wasserablaufstutzen 18 aufweist. Der Wasserzulaufstutzen 17 und der Wasserablaufstutzen 18 liegen auf einer gemeinsamen Achse, nämlich der Längsmittelachse 19 des Gehäuses 10. Der Wasserzulaufstutzen 17 und der Wasserablaufstutzen 18 weisen jeweils einen quadratischen inneren Querschnitt gleicher Größe bzw. Fläche auf, der mit dem äußeren Querschnitt der Wasserversorgungsleitung korrespondiert. Mit Abstand vom jeweiligen äußeren Ende ist im Inneren des Wasserzulaufstutzens 17 und des Wasserablaufstutzens 18 eine Dichtung 20 mit einer umlaufenden, elastisch verformbaren Dichtlippe 21 angeordnet (Fig. 4).

Die Vorrichtung ist in die Wasserversorgungsleitung einsetzbar. Dort, wo die Vorrichtung unter gegebenen Druckverhältnissen angeordnet werden soll, wird die Wasserversorgungsleitung aufgetrennt. An der Trennstelle wird ein kurzer Abschnitt der Wasserversorgungsleitung entfernt, damit zwischen den zueinanderweisenden Enden der Wasserversorgungsleitung ein Abstand entsteht, der eine Anordnung der Vorrichtung zwischen diesen Enden der aufgetrennten Wasserversorgungsleitung zulässt. Verbunden wird die Vorrichtung mit der Wasserversorgungsleitung, indem an der Trennstelle derselben jeweils ein kurzer Endbereich in den Wasserzulaufstutzen 17 bzw. den Wasserablaufstutzen 18 eingeschoben wird. Die Einschubtiefe des jeweiligen Abschnitts der Wasserversorgungsleitung in den Wasserzulaufstutzen 17 und den Wasserablaufstutzen 18 wird durch einen umlaufenden Kragen 22 am zur Innenseite des Gehäuses 10 weisenden Ende des Wasserzulaufstutzens 17 und des Wasserablaufstutzens 18 begrenzt. Dieser Kragen 22 schnürt dadurch den inneren Querschnitt des Wasserzulaufstutzens 17 und des Wasserablaufstutzens 18 geringfügig ein, und zwar bis etwa zum inneren freien Querschnitt der Wasserversorgungsleitung. Durch die Dichtungen 20 werden die in den Wasserzulaufstutzen 17 und den Wasserablaufstutzen 18 eingeschobenen Endbereiche der Wasserversorgungsleitung gegenüber dem Gehäuse 10 abgedichtet.

Obere und untere offene Stirnseiten des Gehäusemittelteils 12 werden abgedeckt durch die Bodenplatte 13 und die Deckelplatte 14. Diese liegen auf bzw. unter den Stirnseiten der Längsseitenwandungen 15 und der Querseitenwandungen 16 des Gehäusemittelteils 12 an. Durch jeweils eine der Bodenplatte 13 und der Deckelplatte 14 zugeordnete umlaufende Dichtung 23 werden die Bodenplatte 13 und die Deckelplatte 14 gegenüber dem Gehäusemittelteil 12 wasserdicht abgedichtet. Verbunden sind die Bodenplatte 13 und die Deckelplatte 14 mit dem Gehäusemittelteil 12 durch Schrauben 24, die von außen durch die Bodenplatte 13 und die Deckelplatte 14 hindurch in die Ausbuchtungen 11 des Gehäusemittelteils 12 eingeschraubt sind.

Im Inneren des Gehäuses 10 befindet sich eine Trennwand 27. Diese unterteilt den Innenraum des Gehäuses 10 in zwei Kammern 25 und 26. In die untere Kammer 25 mündet der Wasserzulaufstutzen 17 ein. Das zulaufende Wasser strömt dadurch in die untere Kammer 25. Die obere Kammer 26 ist mit dem Wasserablaufstutzen 18 verbunden, so dass durch die obere Kammer 26 Wasser durch den Wasserablaufstutzen 18 abfließen kann. Die Trennwand 27 ist im Verlauf zwischen dem Wasserzulaufstutzen 17 und dem Wasserablaufstutzen 18 zweifach abgewinkelt. Dazu verfügt die Trennwand 27 über einen über dem Wasserzulaufstutzen 17 liegenden horizontalen Randabschnitt 28 und einen unter dem Wasserablaufstutzen 18 liegenden, ebenfalls horizontalen Randabschnitt 29. Die in unterschiedlichen horizontalen Ebenen liegenden Randabschnitte 28 und 29 sind verbunden durch einen schräggerichteten Mittelabschnitt 30 der Trennwand 27. Der Mittelabschnitt 30 ist etwas seitlich versetzt, befindet sich also außermittig im Gehäuse 10. Dadurch weist der unter dem Wasserablaufstutzen 18 liegende Randabschnitt 29 eine größere Länge als der auf der anderen Seite des Mittelabschnitts 30 höherliegend angeordnete Randabschnitt 28.

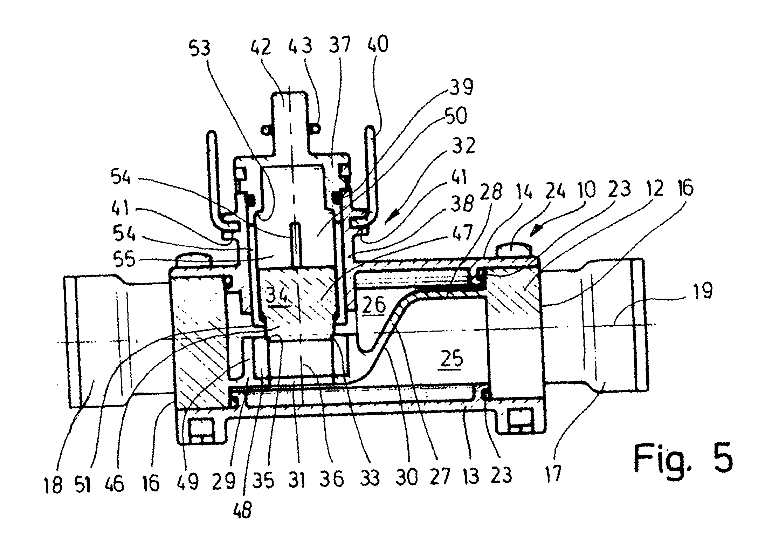

In der Trennwand 27, und zwar im breiteren Randabschnitt 29, befindet sich eine Öffnung 31. Dieser Öffnung 31 ist eine Ventilanordnung 32 zugeordnet (Fig. 5). Durch die Ventilanordnung 32 kann die Öffnung 31 bedarfsweise geöffnet oder geschlossen werden. Dementsprechend wird ein Zulauf von Wasser aus der mit dem Wasserzulaufstutzen 17 verbundenen Kammer 25 zur mit dem Wasserablaufstutzen 18 verbundenen Kammer 26 unterbrochen oder freigegeben. Bei Bedarf können auch mehrere Öffnungen 31 und Ventilanordnungen 32 vorgesehen sein.

Die Ventilanordnung 32 verfügt über einen Ventilsitz 33, der der Öffnung 31 in der Trennwand 27 zugeordnet ist und einen auf- und abbewegbaren Ventilstift 34 mit einer Dichtfläche 35, die mit dem Ventilsitz 33 korrespondiert. Der längliche Ventilstift 34 ist auf einer vertikalen Längsmittelachse 36 auf- und abbewegbar. Die Ventilanordnung 32, und zwar insbesondere der Ventilstift 34, ist der zur Kammer 26 für abfließendes Wasser weisenden Oberseite der Trennwand 27 zugeordnet.

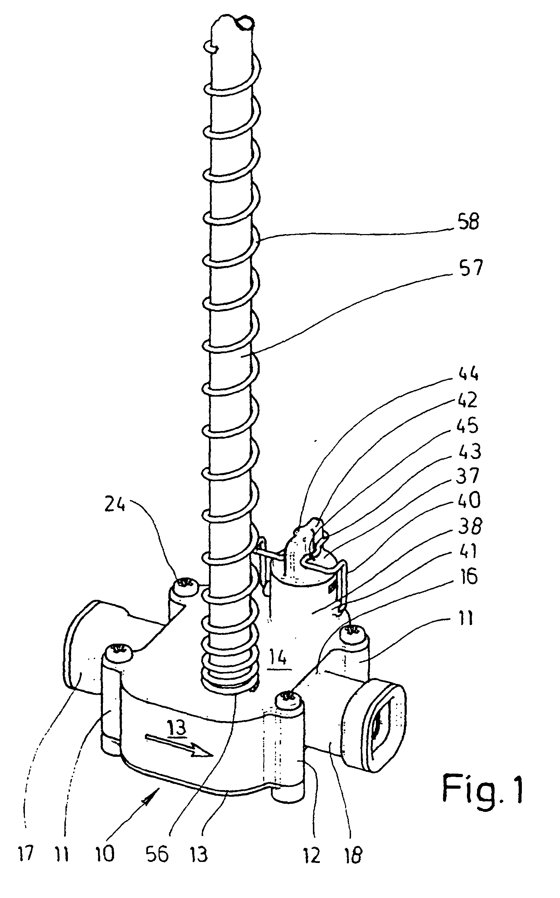

Der Ventilstift 34 ist auf- und abbewegbar geführt in einem zylindrischen Einsteckteil 37. Das Einsteckteil 37 bildet dadurch eine im gezeigten Ausführungsbeispiel zylindrische Führung für den Ventilstift 34. Das Einsteckteil 37 wiederum ist lösbar in einer Hülse 38 angeordnet. Die Hülse 38 ist mit der Deckplatte 14 verbunden, und zwar im gezeigten Ausführungsbeispiel einstückig. Die Hülse 38 ragt mit einem kleineren Teil in die Kammer 26 im Inneren des Gehäuses 10 hinein, während ein größerer Teil der Hülse 38 gegenüber der Deckelplatte 14 nach oben vorsteht. Das Einsteckteil 37 verfügt über einen umlaufenden Dichtring 39, mit dem es gegenüber der Hülse 38 abgedichtet ist. Dem gegenüber der Deckelplatte 14 nach oben vorstehenden Teil der Hülse 38 ist ein Sicherungsbügel 40 zugeordnet. Dieser ist an zwei gegenüberliegenden Lagerstellen 41 an der Außenseite der Hülse 38 um eine horizontale Achse schwenkbar gelagert. In einer Verschlußstellung liegt der Sicherungsbügel 40 an der Oberseite des Einsteckteils 37 an und hält dieses somit in der eingesteckten Position in der Hülse 38. Ein gegenüber der Oberseite des Einsteckteils 37 vorstehender, flacher Griff 42 wird von einer U-förmigen Ausbuchtung 43 des Sicherungsbügels 40 teilweise umgriffen, wodurch das Einsteckteil 37 in der Hülse 38 im wesentlichen unverdrehbar gehalten wird. Der Griff 42 weist in der Mitte eine zylindrische Aufweitung 44 auf, die mit entsprechenden Ausformungen 45 in der Ausbuchtung 43 des Sicherungsbügels 40 korrespondieren und dadurch eine Rastverbindung des Sicherungsbügels 40 in seiner das Ansteckteil 37 in der Hülse 38 sichernden Position bilden (Fig. 1).

Der Ventilstift 34 ist rotationssymmetrisch, nämlich zylindrisch, ausgebildet. Er setzt sich zusammen aus zwei Zylinderabschnitten 46 unterschiedlicher Durchmesser. Ein unterer Zylinderabschnitt 46 weist einen kleineren Durchmesser auf als ein sich darüber befindlicher oberer Zylinderabschnitt 47, dessen Länge im gezeigten Ausführungsbeispiel etwa das Zweifache der Länge des unteren (kleineren) Zylinderabschnitts 46 beträgt. Mit einem größeren Teil des unteren Zylinderabschnitts 46 ragt der Ventilstift 34 bei geschlossener Ventilanordnung 32 aus dem Einsteckteil 37 nach unten heraus. Ein unterer Endbereich des im Durchmesser kleineren Zylinderabschnitts 46 ist mit einer umlaufenden, kegelstumpfartigen Abschrägung versehen, die die kegelstumpfartige Dichtfläche 35 bildet. Diese Dichtfläche 35 korrespondiert mit einem entsprechend ausgebildeten, ebenfalls kegelstumpffömigen Ventilsitz 33 im Bereich der Öffnung 31 in der Trennwand 27. Der kegelstumpfartige Ventilsitz 33 ist umlaufend an der oberen, innenliegenden Kante einer Einsatzhülse 48 angeordnet. Die Einsatzhülse 48 ist wasserdicht eingesetzt in einer zylindrischen Ausnehmung eines umlaufenden Kragens 49 der Trennwand 27. Der Kragen 49 ist der zur oberen Kammer 26 weisenden Seite der Trennwand 27 zugeordnet und umgibt die Öffnung 31 in der Trennwand 27.

Der Ventilstift 34 ist mit seinem oberen (im Durchmesser größeren) Zylinderabschnitt 47 in einer unten offenen Sacklochbohrung 50 im Einsteckteil 37 auf- und abbewegbar geführt. Die Sacklochbohrung 50 weist am unteren Ende eine umlaufende Einschnürung 51 auf. Dadurch wird der Innendurchmesser der Sacklochbohrung 50 am unteren Ende des Einsteckteils 37 eingeschnürt, und zwar etwa bis auf den kleineren Durchmesser des unteren Zylinderabschnitts 46. Die Abmessungen der Ventilanordnung 32 sind so getroffen, dass im geschlossenen Zustand derselben die kegelstumpfförmige Dichtfläche 35 am unteren Ende des Ventilstifts 34 mit dem gleichermaßen kegelstumpfförmig ausgebildeten Ventilsitz 33 an der oberen Innenseite der Einsatzhülse 48 vollflächig anliegen kann, also bei geschlossener Ventilanordnung 32 eine flächige, kegelstumpfartige Dichtung zwischen der Einsatzhülse 48 und dem Venitlstift 34 gegeben ist. Dabei liegt ein Absatz 52 zwischen den unterschiedliche Durchmesser aufweisenden Zylinderabschnitten 46 und 47 des Ventilstifts 34 nicht an der Einschnürung 51 am unteren Ende der Sacklochbohrung 50 im Einsteckteil 37 an (Fig. 5). Die Länge des den oberen (größeren) Zylinderabschnitt 47 des Ventilstifts 34 im Einsteckteil 37 führenden Zylinderabschnitt der Sacklochbohrung 50 ist wesentlicher größer als die Länge des oberen Zylinderabschnitts 47. Im gezeigten Ausführungsbeispiel ist der zylindrische Führungsabschnitt der Sacklochbohrung 50 etwa doppelt so lang wie der obere Zylinderabschnitt 47 des Ventilstifts 34. Dadurch kann insbesondere zum Spülen der Vorrichtung der Ventilstift 34 vollständig, das heißt mit dem gesamten unteren Zylinderabschnitt 46 in die Sacklochbohrung 50 des Einsteckteils 37 eintauchen. Außerdem bietet die Sacklochbohrung 50 des Einsteckteils 37 genügend Platz zur Aufnahme längerer Ventilstifte 34.

Bei aus der Hülse 38 herausgezogenem Einsteckteil 37 ist der Ventilstift 34 hierin gegen Herausfallen gesichert durch die Einschnürung 51 am unteren Ende der Sacklochbohrung 50. Ebenso ist die maximale Einschubtiefe des Ventilstifts 34 im Einsteckteil 37 begrenzt durch einen umlaufenden Absatz 53 im Endbereich der Sacklochbohrung 50.

Ein Teilbereich des Einsteckteils 37 ist mit längsgerichteten Schlitzen 54 versehen. Im gezeigten Ausführungsbeispiel sind vier gleichmäßig auf den Umfang des Einsteckteils 37 verteilte Schlitz 54 vorgesehen. Die gleich großen Schlitze 54 gehen aus von der offenen Unterseite des Einsteckteils 37 und erstrecken sich bis kurz vor dem oberen Absatz 53 der Sacklochbohrung 50. Zwischen benachbarten Schlitzen 54 liegende Übergangsbereiche des Einsteckteils 37 sind aufgrund der Schlitze 54 elastisch aufweitbar, bilden nämlich Federzungen 55. Dadurch ist es möglich, die untere Einschnürung 51 der Sacklochbohrung 50 des Einsteckteils 37 derart aufzuweiten, dass der Ventilstift 34 mit seinem im Durchmesser größeren Zylinderabschnitt 47 durch elastische Aufweitung der Federzunge 55 aus dem Einsteckteil 37 herausgezogen und gegebenenfalls wieder eingesetzt werden kann. Ist das Einsteckteil 37 mit dem Ventilstift 34 in der Hülse 38 des Gehäuses 10 eingesetzt, hält die Hülse 38 die Federzungen 55 des Einsteckteils 37 zusammen, so dass bei montierter Ventilanordnung 32 der Ventilstift 34 formschlüssig im Einsteckteil 37 gehalten ist.

Von der oberen Kammer 26 für die austretende Flüssigkeit zweigt ein Aufsteckstutzen 56 ab. Der Aufsteckstutzen 56 ist einstückig verbunden mit der Deckelplatte 14 des Gehäuses 10. Auf den Aufsteckstutzen 56 ist ein unterer Bereich eines länglichen, senkrechten Rohrs 57 aufgeschoben. Das Rohr 57 dient zur Entlüftung der Tränkeeinrichtung. Eine das Rohr 57 außen umgebende Feder 58 dient zur Stabilisierung des Rohrs 57 und zum Schutz desselben gegen Einknicken. Das Rohr 57 ist vorzugsweise aus durchsichtigem Kunststoff gebildet, wodurch der Wasserstand im Rohr 57 sichtbar ist und dadurch visuell der Druck in der Tränkeeinrichtung sich ermitteln lässt. Das obere, offene Ende des Rohrs 57 kann mit einem nicht gezeigten Ventil versehen sein. Dieses Ventil ist verschließbar, wenn die Tränkeeinrichtung mit höherem Druck gespült werden soll.

Die Vorrichtung besteht im wesentlichen aus Kunststoff. Das gilt vor allem für das Gehäuse 10. Hingegen sind der Ventilstift 34 und die Einsatzhülse 48 aus einem metallischen Werkstoff, insbesondere rostfreiem Stahl, gebildet. Dadurch bestehen die zur Dichtung der Ventilanordnung 32 dienenden Flächen aus einem exakt bearbeitbaren und widerstandsfähigen Material.

Das erfindungsgemäße Verfahren zum Verändern des Druckausgleichsverhältnisses der vorstehend beschriebenen Vorrichtung (Gefälleregler) läuft wie folgt ab:

Da der Ventilstift 34 durch seine Gewichtskraft die Ventilanordnung 32 öffnet und schließt, muss zur Einstellung des entsprechenden Druckausgleichsverhältnisses, nämlich die Differenz des Drucks in der Kammer 25 mit dem Wasserzulaufstutzen 17 im Verhältnis zur Kammer 26 mit dem Wasserablaufstutzen 18, auf die Neigung der Wasserversorgungsleitung abgestimmt werden. Eine stärker geneigte Wasserversorgungsleitung erfordert einen schwereren Ventilstift 34 als eine weniger geneigte Wasserversorgungsleitung. Zur Vornahme einer entsprechenden Einstellung wird im Einsteckteil 37 ein Ventilstift 34 mit einem entsprechenden Gewicht eingesetzt. Die unterschiedlich schweren Ventilstifte 34 verfügen über verschieden lange obere Zylinderabschnitte 47. Der im Durchmesser kleinere untere Zylinderabschnitt 46 bleibt in der Länge in der Regel unverändert.

Soll nun ein Ventilstift 34 durch einen anderen ausgetauscht werden, wird zunächst der Sicherungsbügel 40 zur Seite geschwenkt, so dass er den Griff 42 des Einsteckteils 37 freigibt. Es kann dann das Einsteckteil 37 mit dem Ventilstift 34 aus der Hülse 38 nach oben herausgezogen werden. Nachdem das Einsteckteil 37 mit dem Ventilstift 34 von der Vorrichtung getrennt ist, wird der Ventilstift 34 aus dem Einsteckteil 37 herausgezogen, wobei die von den Schlitzen 54 getrennten Federzungen 55 durch elastische Verformung nach außen gebogen werden. Dabei weitet sich die Einschnürung 51 am unteren Ende des Einsteckteils 37 so weit auf, dass der Ventilstift 34 mit dem oberen, im Durchmesser größeren Zylinderabschnitt 47 nach unten aus dem Einsteckteil 37 herausgezogen werden kann. Danach kann ein anderer Ventilstift 34 unter elastischer Verformung der Federzungen 55 von unten in das Einsteckteil 37 eingeschoben werden. Durch anschließendes Zusammenziehen der Federzungen 55 in die Ausgangslage wird durch die Einschnürung 51 der Ventilstift 34 gegen Herausfallen aus dem Einsteckteil 37 gesichert.

Durch eine entsprechend bemessene Länge der Sacklochbohrung 50 im Einsteckteil 37, die größer ist als zum Öffnen der Ventilanordnung 32 erforderlich, ist es möglich, unterschiedlich lange Ventilstifte 34 dem Einsteckteil 37 zuzuordnen. Die maximale Länge der Sacklochbohrung 50 im Einsteckteil 37 ist dabei so gewählt, dass der Ventilstift 34 mit größter Länge noch in ausreichendem Maße im Einsteckteil 37 auf- und abbewegbar ist, um die Ventilanordnung 32 zu öffnen, und zwar auch im Falle des Spülens der Tränkeeinrichtung. In der Regel ist die Sacklochbohrung 50 so lang bemessen, dass der längste Ventilstift 34 so weit in das Einsteckteil 37 hineinbewegbar ist, dass er sich vollständig in demselben befindet.

Bei einer alternativen Ausgestaltung des Verfahrens ist vorgesehen, das Einsteckteil 37 mit dem jeweiligen Ventilstift 34 als komplette Einheit auszutauschen. In diesem Falle ist es nicht erforderlich, nach dem Herausziehen des Einsteckteils 37 aus dem Gehäuse 10 den Ventilstift 34 vom Einsteckteil 37 zu trennen. Bei dieser Ausführungsform der Erfindung können gegebenenfalls die Schlitze 54 der zylindrischen Mantelfläche des Einsteckteils 37 entfallen, so dass die Führung für den Ventilstift 34 vollständig zylindrisch ist und keine Federzungen 55 aufweist.

Eine Vorrichtung nach einem zweiten (nicht gezeigten) Ausführungsbeispiel der Erfindung unterscheidet sich von der zuvor beschriebenen Vorrichtung hinsichtlich der Ventilanordnung 32. Auch die Ventilanordnung bei der hier zu beschreibenden Vorrichtung verfügt über einen Ventilstift. Dieser ist aber vollständig in einer Einsatzhülse untergebracht, und zwar so, dass er darin auf- und abbewegbar ist. Die Einsatzhülse ist mit einem unteren Teil fest im Kragen der Trennwand angeordnet.

Die Einsatzhülse ist im Inneren gestuft, verfügt nämlich dort über zwei unterschiedliche Durchmesser. Ein oberer Teil der Einsatzhülse mit einem größeren Durchmesser dient zur Aufnahme des Ventilstifts. Ein unterer Teil der Einsatzhülse, der etwa die Höhe des Kragens aufweist, verfügt über einen kleineren Durchmesser. Am Übergang zwischen dem kleineren und dem größeren Durchmesser befindet sich ein vorzugsweise kegelförmiger Ventilsitz. Dieser korrespondiert mit einer Dichtfläche am unteren Ende des Ventilstifts, indem der Ventilstift zum Schließen der Ventilanordnung mit seiner Dichtfläche auf dem Ventilsitz dichtend aufliegt.

Oberhalb des Ventilsitzes sind in der Wandung der Einsatzhülse mehrere Durchgangsbohrungen angeordnet. Vorzugsweise sind etwa vier bis acht gleich große Durchgangsbohrungen gleichmäßig auf den Umfang des Mantels der Einsatzhülse verteilt angeordnet. Bei geöffneter Ventilanordnung, also bei hoch bewegtem Ventilstift, gelangt das Wasser über die untere offene Stirnseite der Einsatzhülse ins Innere derselben und fließt durch die vom Ventilstift ganz oder größtenteils frei gegebenen Durchgangsbohrungen im Mantel der Einsatzhülse radial nach außen ab, und zwar etwa in horizontaler Richtung.

Bei der hier gezeigten Vorrichtung erstreckt sich ein Oberteil der Einsatzhülse bis eine hülsenartige Erweiterung der Deckelplatte des Gehäuses hinein. Diese Hülse ist im Durchmesser größer als der Außendurchmesser der Einsatzhülse ausgebildet, so dass zwischen der Hülse und der Einsatzhülse ein Ringspalt entsteht, durch den Wasser zur Oberseite des Ventilstifts gelangen kann. Die Oberseite der Hülse ist durch einen Verschluss dichtend verschließbar. Durch ein Abnehmen des Deckels wird der Ventilstift in der Einsatzhülse zugänglich. Der Ventilstift kann dann zur Änderung des Druckausgleichsverhältnisses gegen einen anderen Ventilstift, insbesondere einen schweren oder leichteren Ventilstift, ausgetauscht werden. Nach diesem Austausch ist die Oberseite der Hülse an der Deckelplatte durch den Verschluss wieder dichtend verschließbar.

## Patentansprüche

1. Vorrichtung zur Reduzierung, insbesondere zum Ausgleich, des Drucks einer Flüssigkeit in einer vorzugsweise geneigten Flüssigkeitsleitung, vorzugsweise einer Tiertränke, mit einem in die Flüssigkeitsleitung einsetzbaren Gehäuse (10), indem sich eine Kammer (17) für zufließende Flüssigkeit und eine Kammer (18) für abfließende Flüssigkeit befindet, wobei zwischen den durch eine Trennwand (27) getrennten Kammern mindestens eine Ventilanordnung (32) angeordnet ist, die im geöffneten Zustand ein Hindurchströmen der Flüssigkeit durch die Trennwand zwischen den Kammern zulässt, **dadurch gekennzeichnet, dass** die Ventilanordnung (32) mindestens einen Ventilstift (34) aufweist, der durch sein Eigengewicht die Ventilanordnung (32) schließt.

2. Vorrichtung nach Anspruch 1, **dadurch gekennzeichnet, dass** die Ventilanordnung (32) der Kammer (26) für abfließende Flüssigkeit zugeordnet ist.

3. Vorrichtung nach Anspruch 1 oder 2, **dadurch gekennzeichnet, dass** der Ventilstift (34) eine kegelige, insbesondere kegelstumpfartige, Dichtfläche (35) aufweist, die vorzugsweise an einem unteren Ende des Ventilstifts (34) angeordnet ist.

4. Vorrichtung nach einem der vorhergehenden Ansprüche, **dadurch gekennzeichnet, dass** in der Trennwand (27) eine Öffnung (31) angeordnet ist, der ein Ventilsitz (33) zur Bildung der jeweiligen Ventilanordnung (32) zugeordnet ist, wobei vorzugsweise der Ventilsitz (33) kegelig, insbesondere kegelstumpfartig, ausgebildet ist und vorzugsweise der Ventilsitz (33) mit der Dichtfläche (35) des Ventilstifts (34) korrespondiert.

5. Vorrichtung nach Anspruch 4, **dadurch gekennzeichnet, dass** der kegelstumpfförmige Ventilsitz (33) einem separaten Einsatz zugeordnet ist, der in der Öffnung (31) der Trennwand (27) angeordnet ist, und vorzugsweise der Einsatz zur Bildung des Ventilsitzes (33) und/oder der Ventilstift (34) aus einem metallischen Material, insbesondere einem rostfreien Stahl, gebildet sind.

6. Vorrichtung nach einem der vorhergehenden Ansprüche, **dadurch gekennzeichnet, dass** der Ventilstift (34) auf- und abbewegbar in einer länglichen Führung im Gehäuse (10) und/oder dem Einsatz gelagert ist, wobei vorzugsweise die Führung für den Ventilstift (34) im Gehäuse (10) und/oder im Einsatz länger ist als die Länge des Ventilstifts (34), insbesondere 1,5- bis 2-fach so lang wie der Ventilstift (34) ist, und vorzugsweise der Ventilstift (34) in der Führung in mindestens einer axialen Richtung gegen Herausfallen gesichert ist, insbesondere in entgegengesetzten Richtungen.

7. Vorrichtung nach einem der vorhergehenden Ansprüche, **dadurch gekennzeichnet, dass** die Führung mit dem Ventilstift (34) als ein hülsenartiges Einsteckteil (37) ausgebildet sind, das in einer korrespondierenden Buchse bzw. Hülse (38) des Gehäuses (10) gelagert ist, wobi vorzugsweise die Buchse bzw. Hülse (38) einem Deckel des Gehäuses (10) zugeordnet ist, und insbesondere das Einsteckteil (37) gegenüber der Hülse (38) des Gehäuses (10) abgedichtet ist.

8. Vorrichtung nach einem der vorhergehenden Ansprüche, **dadurch gekennzeichnet, dass** das Einsteckteil (37) zusammen mit dem Ventilstift (34) aus der Hülse (38) des Gehäuses (10) herausnehmbar und/oder einsetzbar ist, und gegebenenfalls der Ventilstift (34) im Einsteckteil (37) gegen Herausfallen gehalten ist.

9. Vorrichtung nach einem der vorhergehenden Ansprüche, **dadurch gekennzeichnet, dass** der Ventilstift (34) aus dem Einsteckteil (37) herausnehmbar ist, vorzugsweise Federzungen (55) vorgesehen sind, die unter elastischer Verformung derselben ein Herausnehmen und Wiedereinsetzen des Ventilstifts (34) in bzw. aus dem Einsteckteil (37) zulassen.

10. Verfahren zum Verändern des Druckausgleichsverhältnisses in einer vorzugsweise geneigten Flüssigkeitsleitung, wobei durch eine Ventilanordnung mit einem Ventilkörper der Druck der zufließenden Flüssigkeit verändert wird in einen geringeren Druck für die abfließende Flüssigkeit, **dadurch gekennzeichnet, dass** der die Ventilanordnung (32) durch sein Eigengewicht betätigende Ventilstift (34) gegen einen Ventilstifts (34) mit einem anderen Eigengewicht bedarfsweise ausgetauscht wird.

11. Verfahren nach Anspruch 10, **dadurch gekennzeichnet, dass** der Ventilstift (34) zusammen mit einem Einsteckteil (37) ausgetauscht wird, wobei vorzugsweise ein Austausch des Ventilstifts (34) bei aus der Hülse (38) herausgenommenem Einsteckteil (37) vorgenommen wird.

## Claims

1. Device for reducing, in particular compensating the pressure of a liquid in a preferably inclined liquid conduit, preferably of an animal drinking trough, with a housing (10) which is capable of being inserted into the liquid conduit and in which a chamber (17) for inflowing liquid and a chamber (18) for outflowing liquid are located, at least one valve arrangement (32) being arranged between the chambers separated by a partition (27), in the open state the said valve arrangement (32) allowing the liquid to flow through the partition between the chambers, **characterized in that** the valve arrangement (32) has at least one valve pin (34) which by its own weight closes the valve arrangement (32).

2. Device according to Claim 1, **characterized in that** the valve arrangement (32) is assigned to the chamber (26) for outflowing liquid.

3. Device according to Claim 1 or 2, **characterized in that** the valve pin (34) has a conical, in particular truncated sealing surface (35) which is preferably arranged at a lower end of the valve pin (34).

4. Device according to one of the preceding claims, **characterized in that** an orifice (31) which has a valve seat (33) for the formation of the respective valve arrangement (32) is arranged in the partition (27), the valve seat (33) preferably having a conical, in particular truncated, design and preferably matching the sealing surface (35) of the valve pin (34).

5. Device according to Claim 4, **characterized in that** the truncated valve seat (33) is assigned to a separate insert which is arranged in the orifice (31) of the partition (27) and preferably the insert for forming the valve seat (33) and/or the valve pin (34) are formed from a metallic material, in particular a stainless steel.

6. Device according to one of the preceding claims, **characterized in that** the valve pin (34) is mounted so as to be capable of being moved up and down in an elongate guide in the housing (10) and/or the insert, the guide for the valve pin (34) in the housing (10) and/or in the insert preferably being longer than the length of the valve pin (34), in particular 1.5 to 2 times as long as the valve pin (34) and preferably the valve pin (34) is secured in the guide against falling out in at least one axial direction, in particular in opposite directions.

7. Device according to one of the preceding claims, **characterized in that** the guide with the valve pin (34) is designed as a sleeve-like insert part (37) which is mounted in a matching bush or sleeve (38) of the housing (10), the bush or sleeve (38) preferably being assigned to a cover of the housing (10), and in particular the insert part (37) being sealed off relative to the sleeve (38) of the housing (10).

8. Device according to one of the preceding claims, **characterized in that** the insert part (37), together with the valve pin (34), can be taken out of the sleeve (38) of the housing (10) and/or can be inserted therein and optionally the valve pin (34) is held in the insert part (37) against falling out.

9. Device according to one of the preceding claims, **characterized in that** the valve pin (34) can be taken out of the insert part (37), preferably spring tongues (55) are provided which, by undergoing elastic deformation, allow the valve pin (34) to be taken out of and reinserted into the insert part (37).

10. Method for changing the pressure compensation ratio in a preferably inclined liquid conduit, the pressure of the inflowing liquid being changed to a lower pressure for the outflowing liquid by means of a valve arrangement having a valve body, **characterized in that** the valve pin (34) which by its own weight actuates the valve arrangement (32) is exchanged, as required, for a valve pin (34) having a different own weight.

11. Method according to Claim 10, **characterized in that** the valve pin (34) is exchanged together with an insert part (37), preferably an exchange of the valve pin (34) being carried out, with the insert part (37) taken out of the sleeve (38).

## Revendications

1. Dispositif pour la réduction, en particulier la compensation, de la pression d'un liquide dans une conduite de liquide de préférence inclinée, de préférence d'un abreuvoir, comportant une boîte (10) qui peut être montée sur la conduite de liquide et dans laquelle se trouvent une chambre (17) pour le liquide qui arrive et une chambre (18) pour le liquide qui part, entre ces chambres, séparées par une cloison (27), se trouvant au moins une vanne (32) qui, à l'état ouvert, permet le passage du liquide à travers la cloison entre les chambres, **caractérisé par le fait que** la vanne (32) présente au moins une tige (34) qui la ferme par son propre poids.

2. Dispositif selon la revendication 1, **caractérisé par le fait que** la vanne (32) est associée à la chambre (26) pour le liquide qui part.

3. Dispositif selon l'une des revendications 1 et 2, **caractérisé par le fait que** la tige de vanne (34) présente une portée conique, en particulier tronconique (35) qui est située de préférence à une extrémité inférieure de ladite tige (34).

4. Dispositif selon l'une des revendications précédentes, **caractérisé par le fait que** dans la cloison (27) est faite une ouverture à laquelle est associé un siège (33) pour la formation de la vanne (32), ce siège (33), de préférence, étant conique, en particulier tronconique, et correspondant à la portée (35) de la tige de vanne (34).

5. Dispositif selon la revendication 4, **caractérisé par le fait que** le siège de vanne tronconique (33) est associé à un élément rapporté séparé qui est placé dans l'ouverture (31) de la cloison (27), et de préférence, cet élément rapporté pour la formation du siège de vanne (33) et/ou de la tige de vanne (34) est constitué d'un matériau métallique, en particulier d'un acier inoxydable.

6. Dispositif selon l'une des revendications précédentes, **caractérisé par le fait que** la tige de vanne (34) peut monter et descendre dans la boîte (10) et/ou dans l'élément rapporté dans un guidage allongé, de préférence, le guidage pour la tige de vanne (34) dans la boîte (10) et/ou dans l'élément rapporté est plus long que la tige de vanne (34), en particulier 1,5 à 2,0 fois plus long que celle-ci, et de préférence, la tige de vanne (34) est arrêtée dans le guidage dans au moins une direction axiale afin de ne pas pouvoir tomber, en particulier dans des directions opposées.

7. Dispositif selon l'une des revendications précédentes, **caractérisé par le fait que** le guidage forme avec la tige de vanne (34) un élément enfichable du genre douille (37) qui est monté dans une douille correspondante (38) de la boîte (10), de préférence, la douille (38) est associée à un couvercle de la boîte (10), et en particulier, l'étanchéité est assurée entre l'élément enfichable (37) et la douille (38) de la boîte (10).

8. Dispositif selon l'une des revendications précédentes, **caractérisé par le fait que** l'élément enfichable (37) peut être retiré de la douille (38) de la boîte (10) et/ou y être engagé conjointement avec la tige de vanne (34), et éventuellement, la tige de vanne (34) est arrêtée dans l'élément enfichable (37) afin de ne pas pouvoir tomber.

9. Dispositif selon l'une des revendications précédentes, **caractérisé par le fait que** la tige de vanne (34) peut être retirée de l'élément enfichable (37), et de préférence sont prévues des languettes élastiques (55) qui permettent avec déformation élastique de retirer la tige de vanne (34) de l'élément enfichable (37) et de l'y remettre.

10. Procédé de modification du taux de compensation de pression dans une conduite de liquide de préférence inclinée, dans lequel une vanne comportant un obturateur change la pression du liquide qui arrive en une plus faible pression pour le liquide qui part, **caractérisé par le fait que** la tige de vanne (34), qui actionne la vanne (32) par son propre poids, est au besoin remplacée par une tige de vanne (34) ayant un autre poids propre.

11. Procédé selon la revendication 10, **caractérisé par le fait que** la tige de vanne (34) est remplacée conjointement avec un élément enfichable (37), et de préférence, le remplacement de la tige de vanne (34) est effectué avec l'élément enfichable (37) retiré de la douille (38).
